# FASCICULE DE BREVET EUROPEEN

(11) **EP 0 384 866 B1**
(45) Date de publication et mention de la délivrance du brevet: **06.04.1994**
(21) Numéro de dépôt: 90420097.9
(22) Date de dépôt: 22.02.1990
(51) Int. Cl.: B01D 53/34

(54) **Procédé pour l'épuration des fumées contenant des oxydes d'azote**
Verfahren zur Reinigung von Stichoxyden enthaltenden Rauchgasen
Process for purifying flue gas containing nitrogen oxides

(30) Priorité: 23.02.1989 FR 8902617
(43) Date de publication de la demande: 29.08.1990
(73) Titulaire: LAB S.A., 69003 Lyon (FR)
(72) Inventeur: Vicard, Jean-Fançois, F-69002 Lyon (FR)
(74) Mandataire: Monnier, Guy

(56) Documents cités:
- DE-A- 2 442 828
- DE-A- 2 512 883
- DE-A- 3 507 690
- DE-C- 1 280 219
- Menig, Harald:"Luftreinhaltung durch Adsorption, Absorption und Oxidation", Deutscher Fachschriftenverlag, Wiesbaden, 1977,, 1. Aufl., p. 270
- "Memento Technique de l'eau", Degrémont, 1989, Edition du Cinquantenaire, 9ème ed., tome 2, alinéas 6.3.2 et 6.3.3 et Fig. 727

## Description

La présente invention se réfère aux procédés pour l'épuration par voie humide des fumées contenant des oxydes d'azote.

Dans ces procédés, un liquide de lavage est mis en contact avec les fumées à épurer dans un laveur. Les poussières en suspension dans les gaz sont transférées dans le liquide de lavage et, en même temps, les polluants gazeux sont absorbés par le liquide de lavage suivant leur solubilité et les caractéristiques de ce liquide de lavage. Le débit de celui-ci nécessaire pour épurer les fumées étant en général important, le liquide de lavage est recyclé dans le laveur et une purge de déconcentration aussi faible que possible extrait de l'ensemble laveur-circuit de recyclage les polluants captés.

Dans le cas des oxydes d'azote émis par les procédés de combustion, 95% environ des oxydes d'azote sont à l'état de monoxyde d'azote NO dont la solubilité est très faible ; et une méthode de lavage simple, avec un liquide de lavage contenant de la chaux ou du calcaire comme cela est pratiqué habituellement pour les oxydes de soufre, ne permet pas d'absorber en quantité significative les oxydes d'azote, la proportion de dioxyde d'azote NO₂ dépassant rarement 5 % du total des oxydes d'azote présents. C'est pourquoi différents procédés ont été proposés pour oxyder le NO en NO₂ et ainsi permettre sa captation. Tous ces procédés mettent en oeuvre un oxydant dont la consommation peut être beaucoup plus importante que celle strictement nécessaire stoechiométriquement en raison de la présence par exemple de dioxyde de soufre dissout et qui tend à être oxydé en trioxyde de soufre. Un autre inconvénient de ces procédés est de produire in fine des nitrates qui posent un problème pratiquement insoluble au niveau du traitement de la purge de déconcentration du laveur.

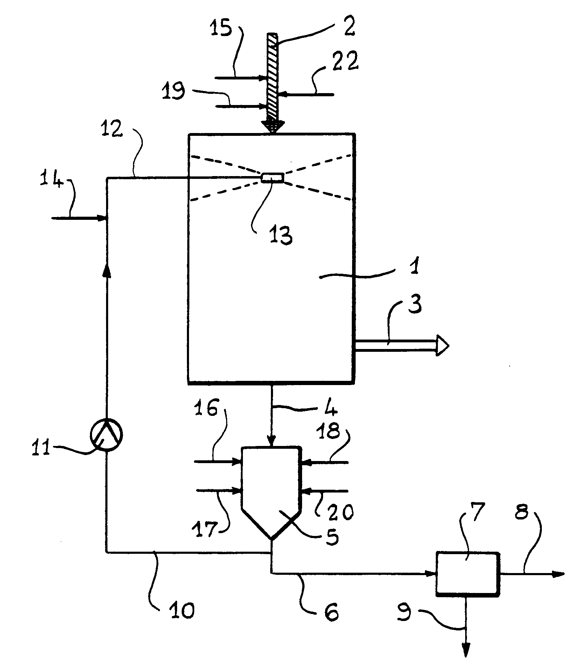

Pour l'état de la technique on pourra se référer aux documents :
DE-A-3 507 690 (DEUTSCHE BABCOCK ANLAGEN AG) ;
Menig, Harald "Luftreinhaltung durch Adsorption, Absorption und Oxidation", 1977, Deutscher Fachschriften Verlag, Wiesbaden, 1. Aufl., Page 270 ;
Degrémont "Memento Technique de l'Eau", 1989, Edition du Cinquantenaire, Neuvième édition, Tome 2, alinéas 6.3.2 et 6.3.3 et Figure 727.

La présente invention vise à supprimer ces inconvénients en utilisant judicieusement les propriétés des autres polluants captés dans le laveur. L'expérience montre, d'ailleurs de manière surprenante, que l'oxydation de NO et NO₂ peut être combinée à une réduction de NO₂ en N₂ grâce aux propriétés réductrices de SO₂ dissout.

L'invention a pour objet le procédé défini à la revendicaiton 1.

Suivant l'invention, les fumées à épurer (2) pénètrent dans le laveur (1) où elles sont contactées par le liquide de lavage recyclé (12) réparti dans les gaz par un dispositif approprié (13). Elles sortent du laveur épurées (3). Le liquide de lavage (12) introduit dans le laveur (1), après contact avec les gaz, est récupéré (4) dans un bac (5) qui peut être aménagé dans la base du laveur (1). Une adjonction d'agent acide liquide (16) peut être faite dans ce bac dans le cas où les fumées n'apportent pas une quantité suffisante d'agent acide pour abaisser le pH du liquide au niveau requis. De même une adjonction d'agent neutralisant (17) est faite pour relever le pH du liquide au niveau requis dans le cas où les cendres volantes captées n'apportent pas elles-mêmes une quantité suffisante d'alcalinité.

Une partie du liquide (6) est dirigée sur une station de traitement (7). Les polluants sont précipités et séparés sous la forme d'un résidu solide (9) tandis que l'eau claire (8) contient des sels neutres ne posant en général pas de problème vis-à-vis du milieu naturel. Un des objets de l'invention est d'éviter que ce rejet d'eau claire (8) contienne des nitrates comme sous-produit de l'absorption des oxydes d'azote.

La plus grande partie du liquide (10) est renvoyée vers le laveur par une pompe de recyclage (11). Après adjonction d'un composé d'oxydation (14), par exemple du Chlorite de sodium, le liquide de lavage (12) est mis en contact avec les fumées. Il réagit alors avec l'agent acide gazeux (15), par exemple de l'acide chlorhydrique introduit dans les fumées, pour produire des agents oxydants qui transforment NO en NO₂. Dans beaucoup d'applications les fumées contiennent aussi du dioxyde de soufre tendant à être oxydé en trioxyde de soufre, ce qui augmente la consommation d'agent oxydant. Un agent intermédiaire introduit dans le liquide de lavage, par exemple (18) dans le bac de recyclage (5) ou dans les fumées (19), est oxydé par le NO₂ produit qui est lui-même réduit en N₂. Ultérieurement, dans le liquide de lavage il est régénéré par réduction par le SO₂ dissout, lui-même oxydé en SO₃ et facilement neutralisé sous la forme de gypse.

Cette méthode permet d'utiliser le potentiel réducteur du SO₂ presque toujours présent tout en utilisant un réducteur actif ayant un rôle d'agent intermédiaire entre le NO₂ et le SO₂. On peut ainsi utiliser l'élément brome sous formé de HBr sans engendrer d'effets secondaires nuisibles à l'environnement. l'introduction d'agent intermédiaire dans le liquide de lavage peut être réalisée par adjonction à celui-ci d'un sel de brome.

Dans le cas où les fumées ne contiennent pas de SO₂ en quantité suffisante, suivant l'invention on introduit dans le liquide de lavage un agent réducteur (20) ne créant pas de problème ultérieur au niveau du traitement (7), par exemple un sulfite ou bisulfite. Alternativement on peut introduire du SO₂ gazeux (22) dans les fumées avant contact avec le liquide de lavage (12).

Dans le cas de fumées émises par un procédé de combustion, l'introduction de l'agent acide gazeux (15) peut résulter utilement de la combustion, elle-même, du combustible avec ou sans additif. Il en est de même pour l'introduction (22) de SO₂ dans les fumées et pour celle de l'agent intermédiaire (18 ou 19).

L'introduction du composé d'oxydation dans le liquide de lavage peut être réalisée, en totalité ou en partie, par captation dans ce liquide après introduction dans les fumées avant contact avec ledit liquide.

Il convient d'observer que dans les cas où quantitativement le laveur (1) ne peut assurer dans de bonnes conditions la totalité de la captation de l'agent réducteur et/ou de l'agent intermédiaire, l'introduction dans la boucle de lavage sera avantageusement réalisée par introduction, dans ladite boucle, de la purge d'un laveur additionnel prévu en aval du laveur (1) et fonctionnant dans des conditions différentes de celui-ci.

## Revendications

1. Procédé pour l'épuration des fumées contenant des oxydes d'azote, dans lequel les fumées (2) sont épurées par voie humide dans un laveur (1) équipé d'une part d'un circuit de recyclage (4-5-10-11-12) pourvu d'un bac (5) susceptible d'être arrangé dans la base dudit laveur (1), d'autre part d'une purge (6) pour la déconcentration des polluants captés, lequel procédé comporte les étapes suivantes :
a) on introduit soit dans le liquide de lavage (12) avant contact de celui-ci avec les fumées (2) dans le laveur (1), soit dans les fumées (2) avant contact de celles-ci avec le liquide de lavage (12) dans le laveur (1), un composé d'oxydation (14, respectivement 22) tel que le chlorite de sodium dont les produits de réaction avec un agent acide sont des agents oxydants ;
b) on introduit dans les fumées (2), avant contact avec le liquide de lavage contenant le composé d'oxydation précité, un agent acide gazeux facilement soluble (15) tel que l'acide chlorhydrique, propre à réagir avec ledit composé d'oxydation pour produire des agents oxydants qui transforment NO en NO₂ ;
c) on introduit soit dans le liquide de lavage à l'intérieur d'un bac de recyclage (5), soit dans les fumées (2) avant contact avec ledit liquide de lavage, un agent réducteur (20, respectivement 22) afin que cet agent se retrouve dans le liquide de lavage contactant les fumées dans le laveur (1) lorsque NO est transformé en NO₂ ;
d) et on introduit soit dans le liquide de lavage à l'intérieur du bac (5), soit dans les fumées (2) avant contact avec ledit liquide, un agent intermédiaire (18, respectivement 19) qui est oxydé par le NO₂ produit et lui-même réduit en N₂, pour éviter la formation du nitrate, et est régénéré à partir de sa forme oxydée par réduction de l'agent réducteur lorsque les fumées sont mises en contact avec le liquide de lavage recyclé à l'intérieur du laveur.

2. Procédé suivant la revendication 1, caractérisé en ce que l'agent réducteur (20, 22) est un sulfite ou un bisulfite.

3. Procédé suivant l'une quelconque des revendications 1 et 2, caractérisé en ce que dans le cas où les fumées (2) sont émises par une installation de combustion, le SO₂ (22) introduit dans lesdites fumées provient de la combustion du combustible, avec ou sans adjonction d'un additif soufré.

4. Procédé suivant l'une quelconque des revendications 1 et 2, caractérisé en ce que dans le cas où les fumées (2) sont émises par une installation de combustion, l'agent acide gazeux (15) introduit dans lesdites fumées provient de la combustion du combustible, avec ou sans additif.

5. Procédé suivant la revendication 1, caractérisé en ce que l'agent acide gazeux (15) est de l'acide chlorhydrique et le composé d'oxydation du Chlorite de Sodium.

6. Procédé suivant la revendication 1, caractérisé en ce que l'introduction de l'agent intermédiaire dans le liquide de lavage est réalisée par captation dans ledit liquide après introduction sous forme gazeuse dans les fumées (2) avant contact avec ledit liquide de lavage.

7. Procédé suivant la revendication 6, caractérisé en ce que dans le cas où les fumées (2) sont émises par une installation de combustion, l'agent intermédiaire (19) introduit dans lesdites fumées provient de la combustion du combustible avec ou sans additif.

8. Procédé suivant la revendication 1, caractérisé en ce que l'agent intermédiaire (18, 19) est de l'acide bromhydrique.

9. Procédé suivant la revendication 1, caractérisé en ce que l'agent intermédiaire (19) est constitué par un sel de brome ajouté au liquide de lavage (12).

## Patentansprüche

1. Verfahren zur Reinigung von Stickoxyde enthaltenden Rauchgasen, bei dem die Rauchgase (2) auf naßem Wege in einem Wäscher (1) gereinigt werden, der zum einen einen Kreislauf (4, 5, 10, 11, 12) für ein Recyclat (wiederverwendbares Waschflüssigkeit) mit einem geeigneten Behälter (5), der an der Grundseite besagten Wäschers (1) angeordnet ist, und der zum anderen einen Abfluß (6) zur Ableitung der abgeschiedenen Verunreinigungen aufweist, wobei sich das Verfahren aus folgenden Schritten zusammensetzt:
a) Entweder der Waschflüssigkeit (12), die mit den Rauchgasen in dem Wäscher (1) in Kontakt steht, oder den Rauchgasen (2), die mit der Waschflüssigkeit (12) in dem Wäscher (1)in Kontakt stehen, wird eine Oxydationsmischung (14 bzw. 22) sowie Natriumchlorid zugegeben, deren Reaktionsprodukte mit einem saurem Mittel Oxydationsmittel bilden.
b) Den Rauchgasen, die in Kontakt mit der die oben erwähnten Oxydationskomponenten enthaltenden Waschflüssigkeit stehen, wird ein saures, gasförmiges leichtlösliches Mittel (15) sowie saure Chloride hinzugefügt, welche geeignet sind mit den besagten Oxydationskomponenten zu reagieren, um Oxydationsmittel zu bilden, die NO in NO₂ umwandeln.
c) Entweder in die Waschflüssigkeit im Innern des Aufbereitungsbehälters (5), oder zu den Rauchgasen (2), welche mit besagter Waschflüssigkeit in Kontakt stehen, wird ein Reduktionsmittel (20 bzw. 22) hinzugefügt, damit dieses Mittel sich in der Waschflüssigkeit befindet und mit den Rauchgasen in dem Wäscher (1) in Kontakt steht, wenn NO in NO₂ umgewandelt worden ist.
d) Entweder der Waschflüssigkeit im Inneren des Behälters (5) oder den Rauchgasen (2), welche in Kontakt mit besagter Flüssigkeit stehen, wird ein Zwischenmittel (18 bzw. 19) zugesetzt, das durch das entstandene NO₂ unter dessen Reduktion zu N₂ oxydiert wird, um die Bildung von Nitrat zu vermeiden, und das regeneriert wird, um aus seiner oxidierte Form durch Reduktion in das Reduktionsmittels überführt zu werden, damit die Rauchgase mit der Waschflüssigkeit, die sich recirculierbar im Inneren des Wäschers befindet, in Kontakt bleiben .

2. Verfahren nach Anspruch 1, **dadurch gekennzeichnet,** daß das Reduktionsmittel (20, 22) ein Sulfit oder ein Bisulfit ist.

3. Verfahren nach einem der Ansprüche 1 und 2, **dadurch ge****kennzeichnet,** daß für dem Fall, daß die Rauchgase (2) von einer Verbrennungsanlage emittiert werden, das SO₂ den aus der Verbrennung stammenden Rauchgasen entweder mit oder ohne Zusatz eines schwefelhaltigen Additivs zugefügt wird.

4. Verfahren nach einem der Ansprüche 1 und 2, **dadurch ge****kennzeichnet,** daß für dem Fall, daß die Rauchgase (2) aus einer installierte Verbrennung stammen, ein saures, gasförmiges Mittel (15) den aus der Verbrennung stammenden Rauchgasen entweder mit oder ohne Additv zugefügt wird.

5. Verfahren nach Anspruch 1, **dadurch gekennzeichnet,** daß das saure gasförmige Mittel (15) Chlorwasserstoffsäure und die Oxidations-Verbindung Sodium-Chlorit ist.

6. Verfahren nach Anspruch 1, **dadurch gekennzeichnet,** daß die Beigabe des Zwischenmittels zu der Waschflüssigkeit derart erfolgt, daß es in gasförmigen Zustand den Rauchgasen (2) beigemischt wird, bevor diese mit der Waschflüssigkeit in Kontakt treten.

7. Verfahren nach Anspruch 6, **dadurch gekennzeichnet,** daß für den Fall, daß die Rauchgase (2) von einer Verbrennungsanlage emittiert werden, das Zwischenmittel (19) den aus der Verbrennung stammenden Rauchgasen mit oder ohne Additiv zugesetzt wird.

8. Verfahren nach Anspruch 1, **dadurch gekennzeichnet,** daß das Zwischenmittel (18, 19) Bromwasserstoffsäure ist.

9. Verfahren nach Anspruch 1, **dadurch gekennzeichnet,** daß das Zwischenmittel (19) aus einem Salz des Broms besteht, welches der Waschflüssigkeit (12) zugesetzt wird.

## Claims

1. A method for purifying exhaust gases containing nitrogen oxides, in which the exhaust gases (2) are wet-purified in a washer (1) equipped firstly with a recycling circuit (4-5-10-11-12) provided with a tank (5) which can be arranged in the base of said washer (1), and secondly with a drain means (6) for deconcentrating the pollutants collected, which method comprises the following stages:
a) an oxidising compound (14 or 22 respectively), such as sodium chlorite, the reaction products of which with an acidic agent are oxidising agents, is introduced either into the washing liquid (12) before the latter makes contact with the exhaust gases (2) in the washer (1), or into the exhaust gases (2) before they make contact with the washing liquid (12) in the washer (1);
b) a readily soluble gaseous acidic agent (15) such as hydrochloric acid, suitable for reacting with the afore-mentioned oxidising compound to produce oxidising agents which convert NO into NO₂ is introduced into the exhaust gases (2), before contact with the washing liquid containing said oxidising compound;
c) a reducing agent (20 or 22 respectively) is introduced either into the washing liquid within a recycling tank (5) or into the exhaust gases (2) before contact with said washing liquid, so that said agent is in the washing liquid contacting the exhaust gases in the washer (1) when NO is transformed into NO₂;
d) and an intermediate agent (18 or 19 respectively) which is oxidised by the NO₂ produced and itself reduced to N₂, in order to avoid the formation of the nitrate, is introduced either into the washing liquid within the tank (5) or into the exhaust gases (2) before contact with said liquid, and said agent is regenerated from its oxidised form by reduction of the reducing agent when the exhaust gases are brought into contact with the recycled washing liquid inside the washer.

2. A method according to Claim 1, characterised in that the reducing agent (20, 22) is a sulphite or a bisulphite.

3. A method according to any one of Claims 1 and 2, characterised in that in the event that the exhaust gases (2) are emitted by a combustion installation, the SO₂ (22) introduced into said exhaust gases comes from the combustion of the fuel, with or without the addition of a sulphurous additive.

4. A method according to any one of Claims 1 and 2, characterised in that in the event that the exhaust gases (2) are emitted by a combustion installation, the gaseous acidic agent (15) introduced into said exhaust gases comes from the combustion of the fuel, with or without additive.

5. A method according to Claim 1, characterised in that the gaseous acidic agent (15) is hydrochloric acid and the oxidising compound is sodium chlorite.

6. A method according to Claim 1, characterised in that the introduction of the intermediate agent into the washing liquid is effected by collection in said liquid after introduction in gaseous form into the exhaust gases (2) before contact with said washing liquid.

7. A method according to Claim 6, characterised in that in the event that the exhaust gases (2) are emitted by a combustion installation, the intermediate agent (19) introduced into said exhaust gases comes from the combustion of the fuel with or without additive.

8. A method according to Claim 1, characterised in that the intermediate agent (18, 19) is hydrobromic acid.

9. A method according to Claim 1, characterised in that the intermediate agent (19) is formed by a bromine salt added to the washing liquid (12).
